(19) Europäisches Patentamt
European Patent Office
Office européen des brevets

(11) EP 2 000 845 A1

(12) EUROPEAN PATENT APPLICATION

(43) Date of publication:
10.12.2008 Bulletin 2008/50

(51) Int Cl.:
G02B 26/08 (2006.01)        G02B 26/10 (2006.01)
H04N 5/74 (2006.01)

(21) Application number: 08251957.0

(22) Date of filing: 05.06.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 08.06.2007 JP 2007152237

(71) Applicant: Hitachi, Ltd.
Chiyoda-ku
Tokyo (JP)

(72) Inventors:
• Shikita, Kazuo
  Tokyo 100-8220 (JP)
• Yatsu, Masahiko
  Tokyo 100-8220 (JP)

(74) Representative: Calderbank, Thomas Roger et al
Mewburn Ellis LLP
York House
23 Kingsway
London WC2B 6HP (GB)

(54) Scanning type image display apparatus

(57) In a scanning type image display apparatus, in which the shape of a reflecting surface of a mirror (1051) as a scanning unit (105) and the spot shape of a light beam (103) on the reflecting surface are adapted to each other to reduce the mirror size and increase the resonance frequency of the mirror, thereby enabling higher-resolution image display, the scanning type image display apparatus includes a laser light source (101) emitting a light beam (103); and a scanning unit (105) that pivots to scan the light beam in a first direction and a second direction substantially perpendicular to the first direction. A pivot width of the light beam in the first direction is larger than a pivot width of the light beam in the second width. A sectional shape of the light beam in the vicinity of the scanning unit is elliptical with a side (1041) in the first direction longer than a side (1042) in the second direction. The longer side is substantially parallel to the first direction of the scanning unit.

FIG.1

**Description**

The present invention relates to a scanning type image display apparatus that scans a laser beam that is light-intensity modulated with image signals to obtain images.

In Fig. 1 of JP-A-5-060989, there is disclosed a raster scanning device that irradiates a circular light beam from a light source 1 in a raster scan manner on a mask 3 using an XY deflector 2, in which a cylindrical lens 5A is disposed in an optical path between the light source 1 and the XY deflector 2 so that the longitudinal axis of the cylindrical lens is orthogonal to the raster scan direction.

However, in the raster scanning device of JP-A-5-060989, the shape of a polygon mirror scanner of the XY deflector and the spot shape of the circular light beam reflected from the polygon mirror scanner are not optimally designed.

The present invention has been made in view of the problems described above, and aims to provide a scanning type image display apparatus in which the shape of a reflecting surface of a mirror as a scanning unit and the spot shape of a light beam on the reflecting surface may be optimized to reduce the mirror size and increase the resonance frequency of the mirror, thereby enabling higher-resolution image display.

In accordance with an aspect of the present invention, there is provided a scanning type image display apparatus including a laser light source emitting a light beam; and a scanning unit that pivots to scan the light beam in a first direction and a second direction substantially perpendicular to the first direction, wherein a pivot width in the first direction is larger than a pivot width in the second direction, wherein a sectional shape of the light beam in the vicinity of the scanning unit is elliptical with a side in the first direction longer than a side in the second direction, and wherein the longer side is substantially parallel to the first direction of the scanning portion.

According to the present invention, it is possible to reduce the size of the mirror as a scanning unit and increase the resonance frequency of the mirror, thereby enabling higher-resolution image display.

Other objects, features and advantages of the invention will become apparent from the following description of the embodiments of the invention taken in conjunction with the accompanying drawings. In the drawings:

Fig. 1 is a schematic perspective view of an optical system of a scanning type image display apparatus according to a first embodiment of the invention.
Fig. 2 is a schematic explanatory view of a semiconductor laser.
Fig. 3 is a schematic top view of a MEMS.
Fig. 4 is a top view of a light beam incident on a mirror as viewed from an H pivot axis (Y axis) direction.
Fig. 5 is a schematic top view of an optical system of a scanning type image display apparatus according to a second embodiment of the invention.
Fig. 6 is an explanatory diagram showing an example of a driving signal of a light source according to a third embodiment of the invention.
Fig. 7 is a schematic top view of an optical system of a scanning type image display apparatus according to a fourth embodiment of the invention.
Fig. 8 is a schematic top view of an optical system of a scanning type image display apparatus according to a fifth embodiment of the invention.

Hereinafter, embodiments of the present invention will be described with reference to the drawings. It is noted that elements having the same functions are denoted by the same reference symbols in the entire drawings and repetitive description thereof will not be given.

In the embodiments described later, a mirror as a scanning unit will be described by way of a microelectromechanical system (hereinafter referred to as MEMS) which utilizes one semiconductor fabrication technology which is a Micro Electro Mechanical System. It is noted that a polygon mirror or a galvano mirror is also usable.

Embodiment 1

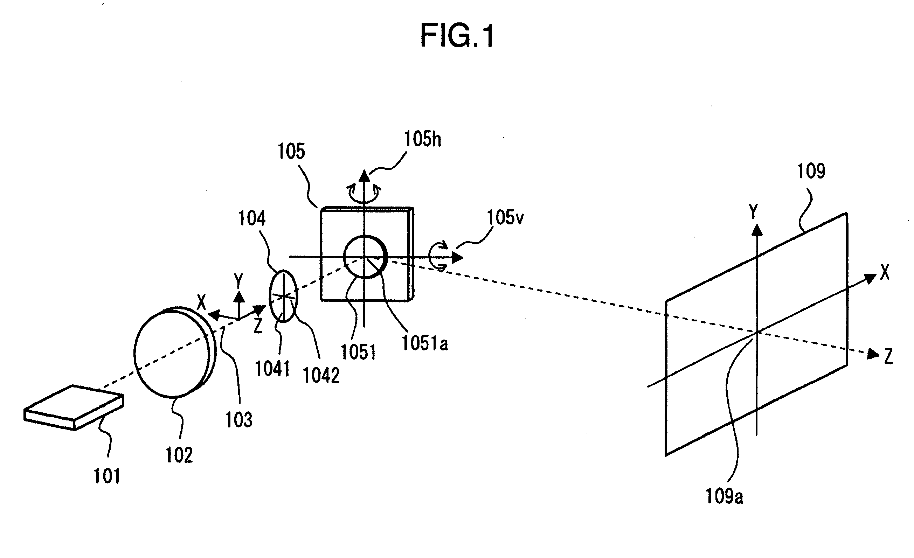

A first embodiment will be described with reference to Figs. 1 to 3.

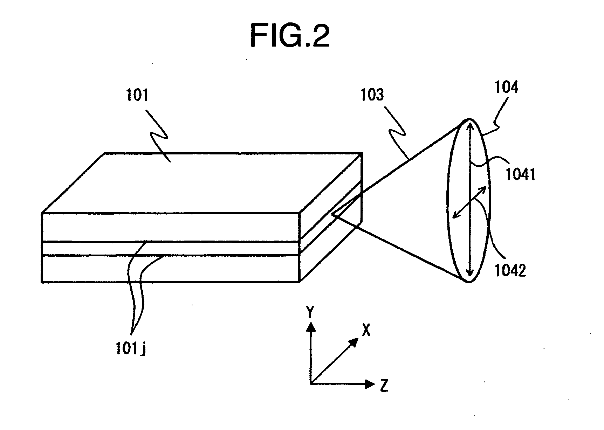

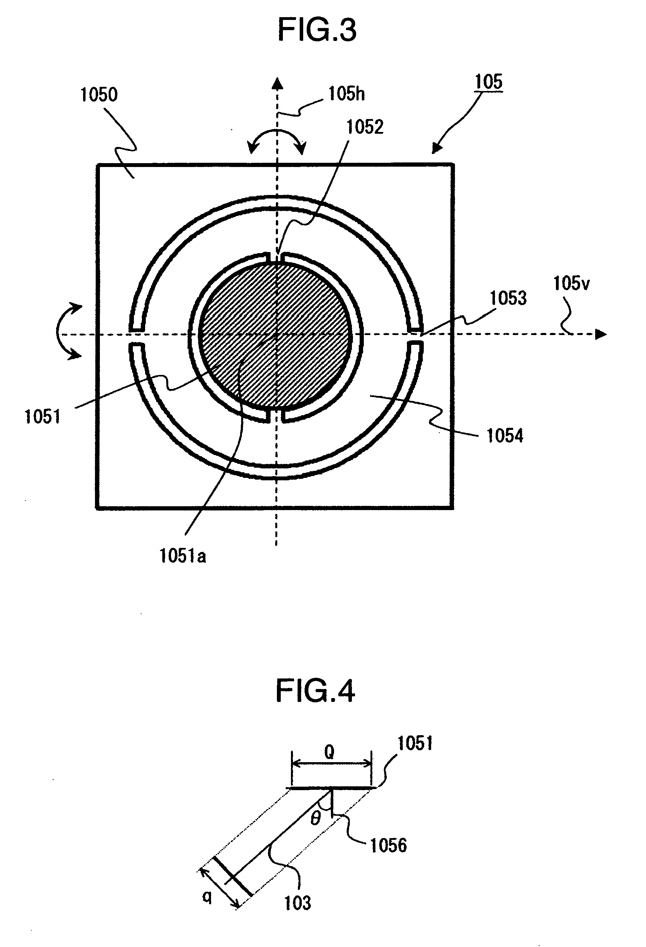

Fig. 1 is a schematic perspective view of an optical system of a scanning type image display apparatus according to a first embodiment of the invention. Fig. 2 is a schematic view of a semiconductor laser as an example of a light source. Fig. 3 is a schematic top view of MEMS having a micro mirror as an example of a scanning unit.

In Fig. 1, the scanning type image display apparatus of the first embodiment includes a semiconductor laser 101 as a light source, a collimator lens 102 that collimates diverging light emitted from the semiconductor laser 101, a MEMS 105 as a scanning unit that reflects a light beam 103 emitted from the semiconductor laser 101 by using a mirror 1051 and scans in a two dimensional area, and a screen 109 as an irradiated body to which images are rendered by the scanning of the MEMS 105.

Since the scanning type image display apparatus of the first embodiment has such a configuration, the diverging light emitted from the semiconductor laser 101 is collimated by the collimator lens 102 and is incident on the MEMS 105. The light beam 103 incident on the MEMS 105 is 2-dimensionally scanned by a mirror 1051 on the MEMS 105, whereby images are formed on the screen 109.

Here, for the sake of simple explanation, an XYZ rectangular coordinate system is introduced in Fig. 1, in which the Z axis is a reference axis. That is, the Z axis (also referred to as an optical axis) is defined by a ray of light traveling from the center of the semiconductor laser 101 toward the center 1051a of the mirror 1051 and then toward the center 109a of the screen 109 by being reflected at the mirror 1051. The Z axis is orthogonal to the surface of the screen 109 at the center 109a of the screen 109. In a plane orthogonal to the Z axis, the X axis is defined by a direction parallel to the horizontal direction (left-right direction; widthwise direction) of the screen 109 and the Y axis is defined by the vertical direction (up-down direction; lengthwise direction) perpendicular to the X axis.

Under such defined coordinate system, the mirror 1051 of the MEMS 105 has, on the screen 109, a horizontal scan axis (hereinafter, referred to as "H pivot axis") 105h, which is a pivot axis for deflecting the light beam 103 in the horizontal direction (a direction parallel to the X axis; a first direction) to perform horizontal scanning and a vertical scan axis (hereinafter, referred to as "V pivot axis") 105v, which is a pivot axis for deflecting the light beam 103 in the vertical direction (a direction parallel to the Y axis; a second direction) to perform vertical scanning.

The direction of the H pivot axis 105h is parallel to the direction of the Y axis. The light beam 103 emitted from the semiconductor laser 101 is incident at an oblique angle with the mirror 1051 from a direction substantially perpendicular to the H pivot axis 105h. Hereinafter, to simplify the expressions, directions parallel to the X axis, Y axis and H pivot axis and directions parallel to the H pivot axis will be simply referred to as "X axis direction," "Y axis direction," and "H pivot axis direction," respectively.

The semiconductor laser 101 is used as a light source. As the semiconductor laser, an edge emission type laser diode, a surface emission type semiconductor laser, a diode-pumped solid-state laser, etc. are mainly used because they are known highly directive and less power consuming. Typically, the light intensity distribution of a laser beam emitted from the semiconductor lasers is elliptical. In the first embodiment, the longer axis 1041 of the ellipsoid of the light intensity distribution in a sectional spot 104 of the light beam 103 emitted from the laser light source is substantially parallel to the H pivot axis 105h direction of the MEMS, details of which will be described later. In addition, the shorter axis of the ellipsoid of the light intensity distribution is denoted by reference numeral 1042.

The light intensity distribution characteristics of the semiconductor laser will be described with reference to Fig. 2.

As is obvious from Fig. 2, in the semiconductor laser 101, since the structure on the section orthogonal to the Z axis that extends in the direction the light is emitted is asymmetric in the vertical (Y axis direction) and horizontal (X axis direction) directions, the beam may undergo astigmatism. Though the astigmatism can be reduced by appropriately designing the laser, some degree of astigmatism is inevitable due to manufacturing variations.

The light beam with astigmatism has different divergence angles in the horizontal and vertical directions. Therefore, the light intensity distribution of the sectional spot 104 of the light beam 103 on the Z axis plane is elliptical. The direction of deflection of the laser light is parallel to the shorter axis 1042 of the elliptical light intensity distribution. That is, the radiation angle in a direction (Y axis direction) perpendicular to a PN junction surface 101j of a semiconductor laser chip is large, and the radiation angle in a direction (X axis direction) parallel to the PN junction surface is small. An optical system such as a cylindrical lens or a prism (not shown) may be added to correct the astigmatism and form a circular spot; however, this will increase the cost or the size of the apparatus and it is thus not desirable.

The light beam 103 (of which the longer axis 1041 of the ellipsoid of the sectional spot 104 extends in the Y axis direction) output from the semiconductor laser 101 is collimated by the collimator lens 102 to be parallel to the Z axis (optical axis). However, the light intensity distribution of the sectional spot 104 of the collimated light beam 103 on a section perpendicular to the Z axis is still elliptical. The collimated light beam 103 is incident on the MEMS mirror 105 as the scanning unit.

The MEMS unit 105 pivots the mirror 1051 in two-dimensional directions using the H pivot axis 105h and the V pivot axis 105v so that the incident light beam 103 is scanned over the screen 109.

The shape of the MEMS according to the first embodiment will be described with reference to Fig. 3.

As shown in Fig. 3, the MEMS 105 is provided with a circular ring-shaped gimbal 1054 inside a silicon substrate 1050, and is further provided with the mirror 1051 inside the gimbal 1054. The silicon substrate 1050 and the gimbal 1054 are coupled with each other by paired torsion springs 1053 that are opposed to the axial direction perpendicular to the Y axis. Similarly, the gimbal 1054 and the mirror 1051 are coupled with each other by paired torsion springs 1052 that are opposed to the Y axis direction. The mirror 1051 is pivoted about the H pivot axis 105h, that is, the Y axis direction that connects the paired opposing torsion springs 1052. The mirror 1051 is also pivoted about the V pivot axis 105v, that is, the direction that connects the paired opposing torsion springs 1053. It is noted that the H pivot axis 105h and the V pivot axis 105v are perpendicular to each other.

The respective paired opposing torsion springs 1052 and 1053 are rotated and bent by a driving force such as an electrostatic force, an electromagnetic force or a piezoelectric force (not shown) and move in an oscillating manner. Here, the resonance frequency is expressed by Formula 1.

[Formula 1]

$$f = \frac{1}{2p}\sqrt{\frac{k}{m}}$$

In the formula, k is a spring constant and m is the mass of the mirror 1051.

To attain high resolution, the resonance frequency needs to be lowered and for this, it would be effective to decrease the mass of the mirror 1051. Therefore, it is preferable to minimize the area of the mirror 1051 in order to attain high resolution in an image display apparatus.

However, due to manufacturing variations, the mass of the mirror 1051 may become uneven, and as a result, the resonance frequency may have individual differences. As a possible cause of the uneven mass of the mirror 1051, the varying size of the peripheral portion of the mirror due to uneven etching can be thought of. In order to suppress the influence of the above and reduce the uneven resolution, it would be effective to minimize the peripheral length of the mirror 1051. Thus, in the first embodiment, the mirror 1051 is formed in a circular shape with the greatest ratio of area to peripheral length.

The above MEMS 105 is maintained at a predetermined oblique angle around the H pivot axis 105h (the Y axis) so that during no deflection, the reflected light is incident on the center 109a of the screen 109. The mirror 1051 is pivoted about the H pivot axis 105h and the V pivot axis 105v with reference to the surface position of the mirror 1051 at the above time.

Here, to simplify the explanations, assume that the light beam 103 is incident at an oblique angle from a direction perpendicular to the H pivot axis 105h, deflected only about the H pivot axis 105h, and irradiated on the X axis of the screen 109. The reason of such assumption is that when images are displayed with an aspect ratio (horizontal to vertical) of 4:3 or 16:9, the pivot width of the H pivot axis 105h is larger than the pivot width of the V pivot axis 105v and the width of the light spot incident on the mirror 1051 is large. Another reason is that since the mirror 1051 is usually preset based on the H pivot axis 105h, the pivot width of the H pivot axis 105h is larger than the pivot width of the V pivot axis 105v and the width of the light spot incident on the mirror 1051 is large. Further, in this case, the incidence angle of the light beam 103 with respect to a normal line 1056 of the mirror 1051 is denoted by θ in Fig 4. Fig. 4 is a top view of the light beam 103 incident on the mirror 1051 as viewed from the H pivot axis (Y axis) direction. As shown in Fig. 4, the length Q of the spot of the light beam 103 on the mirror 1051 in a direction perpendicular to the H pivot axis 105h (the V pivot axis 105v direction) can be expressed by Formula 2, assuming the length of the section perpendicular to the incidence direction of the spot be q.

[Formula 2]

$$Q = q/\cos\theta$$

That is, on the mirror 1051, the sectional length q of the spot expands in a direction perpendicular to the H pivot axis 105h. The expansion factor can be expressed by Formula 3.

[Formula 3]

$$\text{(Expansion Factor)} = 1/\cos\theta$$

Therefore, the longer axis 1041 of the elliptical light intensity distribution of the sectional spot 104 of the light beam 103 emitted from the semiconductor laser is made parallel to the H pivot axis 105h. With this arrangement, though the length of the light beam 103 in the direction of the longer axis 1041 does not vary on the mirror 1051, the length in the direction of the shorter axis 1042 is expanded by the expansion factor of Formula 3. Therefore, the spot of the light beam on the mirror 1051 becomes substantially circular.

In the first embodiment, the mirror 1051 is made substantially circular in order to increase the resonance frequency to meet high resolution requirements. Further, the spot shape on the mirror 1051 is made substantially circular suitable for the shape of the mirror 1051. In the past, light could not contact some portion of the mirror in the direction of the pivot axis (H pivot axis direction) of the mirror. To the contrary, according to the first embodiment, since it is possible to appropriately adjust the shape of the mirror and the light spot shape on the mirror in a suitable manner, no vignetting (darkening the corners of resulting images) is caused in the direction perpendicular to the H pivot axis 105h of the mirror and it is also possible to reduce the non-light contacting area in the H pivot axis direction of the mirror. Therefore, it is possible to reflect the light beam 103 in an efficient manner. Since the light spot does not expand in the H pivot axis direction, it is possible to minimize the mirror size of the MEMS as much as possible and increase the resonance frequency. Further, by appropriately adjusting the mirror shape of the MEMS and the spot shape of the incident light on the mirror in a suitable manner, it is possible to optimally design the shape of the MEMS and to reduce the size, thereby reducing the power consumption required to drive the mirror. Accordingly, the MEMS can be formed into small size.

The elliptical ratio (the ratio of the shorter axis to the longer axis) of a typical semiconductor laser is about 1:1.1 to about 1:1.5. To maximize the efficiency, the incidence angle (also referred to as oblique angle) $\theta$ of the light beam 103 on the MEMS 105 in the horizontal scanning direction is set to about 20 degrees to 45 degrees.

Embodiment 2

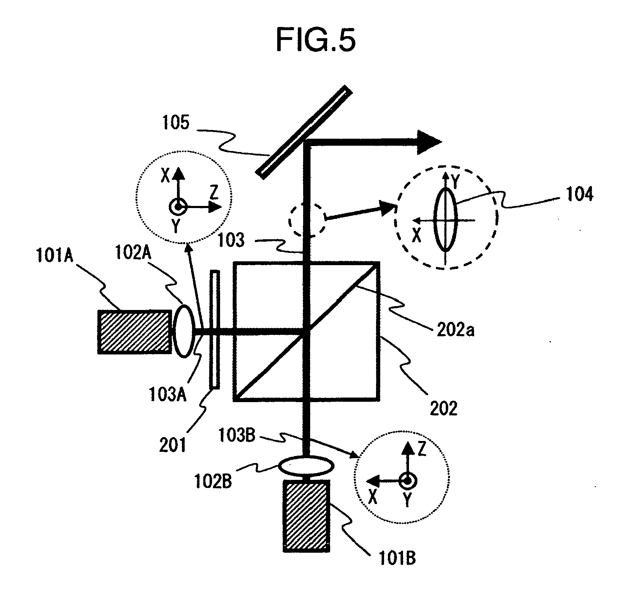

In a second embodiment, a scanning type image display apparatus that combines light beams from two laser light sources onto one optical axis will be described with reference to Fig. 5.

Fig. 5 is a schematic top view of an optical system of a scanning type image display apparatus according to a second embodiment of the invention as viewed from the Y axis direction parallel to the H pivot axis of the MEMS.

In Fig. 5, the same XYZ orthogonal coordinate system having a reference axis at the Z axis as introduced in Fig. 1 will be used. In the second embodiment, the longer axis direction of the elliptical light intensity distribution of the semiconductor laser is set to the H pivot axis direction of the MEMS. As described above, the polarization direction of the semiconductor laser is parallel to the shorter axis of the elliptical light intensity distribution of the laser light. Therefore, the shorter axes of a semiconductor laser 101A as a first light source and a semiconductor laser 101B as a second light source correspond to the X axis direction in the respective orthogonal coordinate systems.

In Fig. 5, reference numeral 201 denotes a 1/2 wave plate and reference numeral 202 denotes a polarization beam splitter as a combining unit for combining two laser lights. In the following descriptions, symbol A will be attached to the elements of the first light source and symbol B will be attached to the elements of the second light source. However, it is noted that for simple explanations, the symbols A and B may be omitted when there is no need to distinguish between them.

The light beam 103A (of which the polarization direction is the X axis direction) emitted from the semiconductor laser 101A as the first light source is collimated by a collimator lens 102A and incident on the polarization beam splitter 202 with the polarization direction changed to the Y axis direction by the 1/2 wave plate 201. The light beam 103B (of which the polarization direction is the X axis direction) emitted from the semiconductor laser 101B as the second light source is also collimated by the collimator lens 102B and incident on the polarization beam splitter 202.

The polarization beam splitter 202 is arranged that a polarization separation film 202a thereof is orthogonal to the XZ plane of the semiconductor lasers 101A and 101B and inclined at about 45 degrees to the respective Z axes (optical axes) of the semiconductor lasers 101A and 101B. Therefore, the light beam 103A incident on the polarization beam splitter 202 is an S polarization beam to the polarization separation film 202a and the light beam 103B incident on the polarization beam splitter 202 is a P polarization beam to the polarization separation film 202a.

That is, the light beam 103A is reflected on the polarization separation film 202a of the polarization beam splitter 202, and the light beam 103B passes through the polarization separation film 202a, whereby the two light beams are combined into a single light beam 103. A sectional spot 104 of the combined light beam 103 maintains its elliptical shape that the longer axis direction extends in the H pivot axis direction of the MEMS 105.

Similar to the first embodiment, the MEMS 105 is maintained at a predetermined oblique angle, not at right angles, with respect to the incidence direction of the light beam 103 in order to reflect the combined light beam 103 toward the screen. Therefore, the light beam 103 combined by the polarization beam splitter 202 onto the same optical axis is reflected by the two-dimensional pivoting of the mirror 1051 on the MEMS 105, whereby images are scanned and formed on the screen 109.

In combining the light beam 103A and the light beam 103B using the beam splitter 202, a method can be considered that rotates the semiconductor laser 101A itself by 90 degrees about the optical axis of the light beam to rotate the polarization direction. However, in this case, the shape of a sectional spot 104A of the light beam 103A is also rotated by 90 degrees with respect to a sectional spot 104B of the other light beam 103B. As a result, a combined sectional spot 104 grows too much, thereby decreasing the efficiency when reflecting on the mirror 1051; therefore, it is not desirable.

According to the second embodiment described above, since the two light beams can be scanned efficiently and simultaneously, it is possible to provide a high-resolution scanning type image display apparatus capable of providing the same advantages as the first embodiment.

Embodiment 3

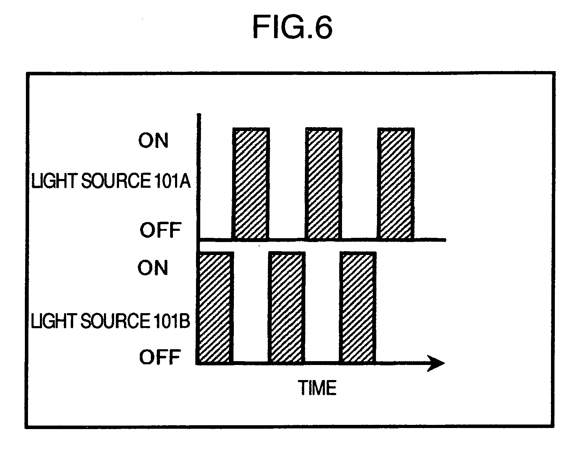

Next, a third embodiment will be described with reference to Fig. 6.

Fig. 6 is an explanatory diagram showing an example of a driving signal of a light source according to a third embodiment of the invention.

In the third embodiment, the light emissions by the semiconductor lasers 101A and 101B of the second embodiment are pulsed in an alternating manner such that the semiconductor laser 101B is off during an ON period of the semiconductor laser 101A and on during an OFF period of the semiconductor laser 101A. According to the third embodiment, the heat value of light emissions by the light sources can be reduced by half compared with the case of continuous and simultaneous light emission using two light sources at the sacrifice of brightness, thereby improving duration of the light sources.

Embodiment 4

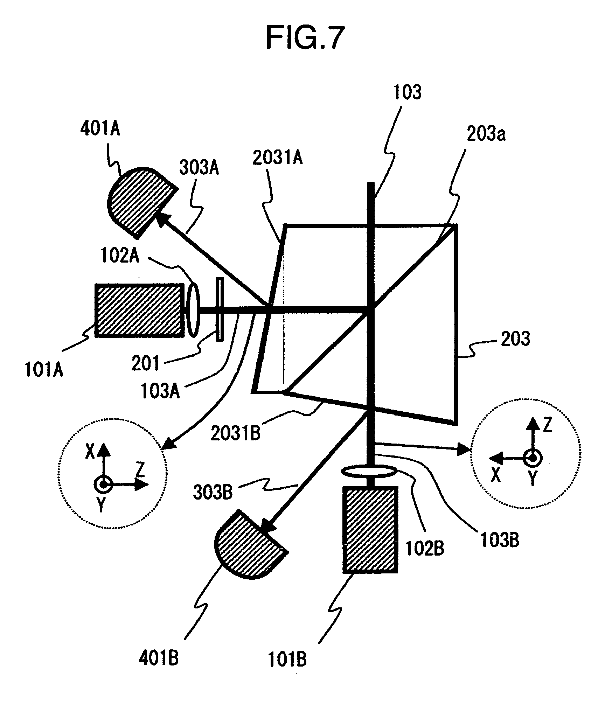

Next, a fourth embodiment will be described with reference to Fig. 7.

Fig. 7 is a schematic top view of an optical system of a scanning type image display apparatus according to a fourth embodiment of the invention as viewed from the Y axis direction parallel to the H pivot axis of the MEMS. In Fig. 7, the MEMS 105 and the screen 109 are not illustrated. Also, the same XYZ orthogonal coordinate system having a reference axis at the Z axis as introduced in Fig. 1 will be used. In addition, in the fourth embodiment, the longer axis direction of the elliptical light intensity distribution of the semiconductor laser is set to the H pivot axis direction of the MEMS.

In the fourth embodiment, as shown in Fig. 7, instead of using the polarization beam splitter 202 of the second embodiment, which is a right-angle prism, there is used a polarization beam splitter 203 having incidence surfaces 2031A and 2031B that are inclined with respect to the respective Z axes (optical axes) of the light beams 103A and 103B. The optical system includes detecting portions 401A and 401B for detecting the light intensities of light beams reflected on the incidence surfaces of the polarization beam splitter 203.

Since the incidence surfaces 2031A and 2031B of the polarization beam splitter 203 are slightly inclined with respect to the respective light beams 103A and 103B, it is possible to prevent the light beams 303A and 303B reflected on the respective incidence surfaces 2031A and 2031B of the polarization beam splitter 203 from entering back to the semiconductor laser 101. With this arrangement, it is possible to suppress unnecessary heating of the semiconductor laser, thereby increasing the life of the semiconductor laser.

By detecting the light intensities of the light beams 303A and 303B reflected on the respective incidence surfaces 2031A and 2031B of the polarization beam splitter 203 at the detecting portions 401A and 401B, it is possible to monitor the intensity change of the light beams 103A and 103B. With this arrangement, for example, when the intensities of the light beams 103A and 103B are low due to a prolonged use, a feedback control can be performed to increase the semiconductor laser output. Accordingly, it is possible to provide a scanning type image display apparatus with less performance variation during prolonged use.

In this way, a scanning type image display apparatus can be provided in which the life of the semiconductor laser is increased and which shows less performance variation during prolonged use.

Embodiment 5

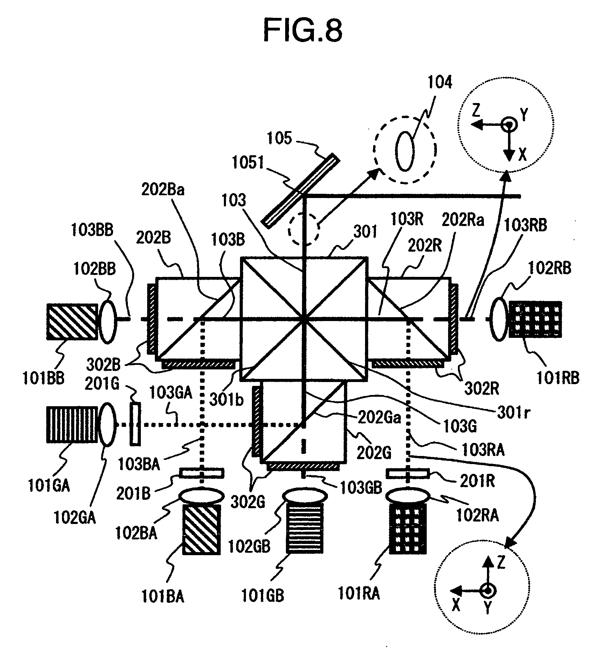

Next, a fifth embodiment according to the invention will be described with reference to Fig. 8.

Fig. 8 is a schematic top view of an optical system of a scanning type image display apparatus according to a fifth embodiment of the invention as viewed from the Y axis direction parallel to the H pivot axis of the MEMS. In Fig. 8, the MEMS 105 and the screen 109 are not illustrated. Also, the same XYZ orthogonal coordinate system having a reference axis at the Z axis as introduced in Fig. 1 will be used. In addition, in the fifth embodiment, the longer axis direction of the elliptical light intensity distribution of the semiconductor laser is set to the H pivot axis direction of the MEMS. In the following descriptions, symbols R, G, and B will be attached to the corresponding elements of the respective light sources for red (hereinafter referred to as R), green (hereinafter referred to as G), and blue (hereinafter referred to as B). Similarly, symbols A and B will be attached to the corresponding elements of the first and second light sources for each color. However, it is noted that for simple explanations, the symbols may be omitted when there is no need to distinguish between them.

As being obvious from Fig. 8, the fifth embodiment is characterized in that light beams emitted from two red semiconductor lasers 101RA and 101RB, two green semiconductor lasers 101GA and 101GB, and two blue semiconductor lasers 101BA and 101BB are combined into a single light beam by a combining portion and the combined light beam is made incident on the mirror 1051 of the MEMS 105.

The combining portion includes a dichroic prism 301 having three incidence surfaces and one exit surface and polarization beam splitters 202R, 202G, and 202B that are respectively mounted on the three incidence surfaces of the dichroic prism 301.

The polarization beam splitter 202R has two incidence surfaces on which the light beams 103RA and 103RB are incident respectively and on which a dichroic coat 302R is provided so that the red light (R light) can pass through the incidence surfaces (the purpose of providing the dichroic coat 302 will be described later). The polarization beam splitter 202G has two incidence surfaces on which the light beams 103GA and 103GB are incident respectively and on which a dichroic coat 302G is provided so that the green light (G light) can pass through the incidence surfaces. The polarization beam splitter 202B has two incidence surfaces on which the light beams 103BA and 103BB are incident respectively and on which a dichroic coat 302B is provided so that the blue light (B light) can pass through the incidence surfaces.

First, the case of combining lights from the first and second light sources by the polarization beam splitter 202 will be described. Since the combining operation is all the same for R, G and B lights, the case of using R light will be described as a representative and descriptions regarding combination in the G and B lights will be omitted.

The light beam 103RA (of which the polarization direction is the X axis direction) emitted from the semiconductor laser 101RA as the first light source is collimated by a collimator lens 102RA and incident on the polarization beam splitter 202R with the polarization direction changed to the Y axis direction by the 1/2 wave plate 201R. The light beam 103RB (of which the polarization direction is the X axis direction) emitted from the semiconductor laser 101RB as the other second light source is also collimated by the collimator lens 102RB and incident on the polarization beam splitter 202R.

The polarization beam splitter 202R is arranged that a polarization separation film 202Ra thereof is inclined at about 45 degrees to the respective Z axes of the semiconductor lasers 101RA and 101RB. Therefore, the light beam 103RA incident on the polarization beam splitter 202R is an S polarization beam to the polarization separation film 202Ra and the light beam 103RB incident on the polarization beam splitter 202R is a P polarization beam to the polarization separation film 202Ra.

That is, the light beam 103RA is reflected on the polarization separation film 202Ra of the polarization beam splitter 202R, and the light beam 103RB passes through the polarization separation film 202Ra, whereby the two light beams are combined into a single R light beam 103. A sectional spot 104 of the combined light beam 103 maintains its elliptical shape that the longer axis direction extends in the H pivot axis direction of the MEMS 105.

Next, combination of the R light beam, G light beam and B light beam will be described.

The dichroic prism 301 has an R reflection film 301r and a B reflection film 301b so that the films cross each other inside the prism. The R reflection film 301r has a function of reflecting an R light beam and transmitting other color light beams. The B reflection film 301b has a function of reflecting a B light beam and transmitting other color light beams.

The light beam 103R combined by the polarization beam splitter 202R and incident on the dichroic prism 301 is reflected on the R reflection film 301r of the dichroic prism 301 and guided to the MEMS 105. Similarly, the light beam 103B combined by the polarization beam splitter 202B and incident on the dichroic prism 301 is reflected on the B reflection film 301b of the dichroic prism 301 and guided to the MEMS 105. Further, the light beam 103G combined by the polarization beam splitter 202G and incident on the dichroic prism 301 passes through the R reflection film 301r and the B reflection film 301b of the dichroic prism 301 and guided to the MEMS 105. In this way, the three color light beams 103R, 103G, and 103B are combined into a single light beam 103. A sectional spot 104 of the combined light beam 103 maintains its elliptical shape that the longer axis direction extends in the H pivot axis direction of the MEMS 105.

Similar to the first embodiment, the MEMS 105 is maintained at a predetermined oblique angle, not at right angles, with respect to the incidence direction of the light beam 103 in order to reflect the combined light beam 103 toward the screen. Therefore, the light beam 103 combined by the dichroic prism 301 onto the same optical axis and incident on the MEMS 105 is reflected by the two-dimensional pivoting of the mirror 1051 on the MEMS 105, whereby images are scanned and formed on the screen 109.

However, in practical situations, some part of the R light beam 103R incident on the dichroic prism 301 may pass through the R reflection film 301r or be reflected on the B reflection film 301b. This stray light having passed through the R reflection film 301r and coming through the polarization beam splitter 202B may be made incident on the semiconductor lasers 101BA and 101BB by being reflected on or passed through a polarization separation film 203Ba. As a result, there is a fear that the semiconductor lasers 101BA and 101BB are heated, thereby decreasing the life of the semiconductor lasers. Similarly, the stray light having reflected on the B reflection film 301b and coming through the polarization beam splitter 202G may be made incident on the semiconductor lasers 101GA and 101GB by being reflected on or passed through a polarization separation film 203Ga. As a result, there is a fear that the semiconductor lasers 101BA and 101BB are heated, thereby decreasing the life of the semiconductor lasers. Such stray light is generated in the dichroic prism 301 regardless of the color of the light beam; that is, the G light beam 103G and the B light beam 103B will also generate such stray light.

To solve or eliminate such a problem, in a fifth embodiment in the invention, the dichroic coat 302 is provided on the incidence surface of the polarization beam splitter 202 so as to transmit only corresponding one of the color light beams from the corresponding light source. With this arrangement, it is possible to prevent generation of such stray light of other color light beams and suppress unnecessary heating of the semiconductor laser 101, thereby increasing the life of the light source.

In the fifth embodiment, the polarization beam splitter 202 may be bonded to the dichroic prism 301. By doing this, it is possible to reduce a reflection loss at the interface between the polarization beam splitter 202 and the dichroic prism 301 and it is therefore advantageous for increasing brightness. As an additional advantage of the bonding, it is possible to reduce an angular error in the reflection surfaces of the dichroic prism 301 and the polarization beam splitter 202 in assembling. Therefore, it is possible to efficiently make the light beams incident on the mirror 1051 with less errors.

According to the fifth embodiment, since the respective light sources can be disposed separate from each other, it is possible to reduce heating of the light source due to the radiation heat from other light sources.

In this way, it is possible to provide a scanning type image display apparatus capable of providing excellent resolution and brightness and displaying color images.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

**Claims**

1. A scanning type image display apparatus, comprising:

    a laser light source (101)emitting a light beam (103); and
    a scanning unit (105) that pivots to scan the light beam from said laser light source in a first direction and a second direction substantially perpendicular to said first direction,
    wherein a pivot width of the light beam in the first direction is larger than a pivot width of the light beam in the second width,
    wherein a sectional shape (104) of the light beam in the vicinity of the scanning unit (105) is elliptical with a side (1041) in the first direction longer than a side (1042) in the second direction, and
    wherein said longer side (1041) is substantially parallel to the first direction of said scanning unit (105).

2. The scanning type image display apparatus according to Claim 1, wherein the scanning unit is a mirror (1051) having a substantially circular shape.

3. The scanning type image display apparatus according to Claim 1, wherein the scanning unit (105) is a MEMS.

4. The scanning type image display apparatus according to Claim 1, further comprising a collimator lens (102) that is provided between the laser light source and the scanning unit and collimates the light beam from the laser light source.

5. A scanning type image display apparatus, comprising:

first and second laser light sources (101A,101B) arranged to emit light beams (103A,103B) in substantially mutually perpendicular directions, with mutually different polarization directions;

a polarization beam splitter (202) which combines the light beams emitted from the first and second laser light sources;

a 1/2 wave plate (201) which is provided between one of the first and second laser light sources and the polarization beam splitter and converts the polarization direction of the light beam from one of the first and second laser light sources; and

a scanning unit (105) that pivots to scan the light beam from the polarization beam splitter in a first direction and a second direction substantially perpendicular to the first direction,

wherein a pivot width of the light beam in the first direction is larger than a pivot width of the light beam in the second direction,

wherein a sectional shape (104) of the light beam in the vicinity of the scanning unit is elliptical with a side in the first direction longer than a side in the second direction, and

wherein the longer side is substantially parallel to the first direction of the scanning unit.

6. The scanning type image display apparatus according to Claim 5, further comprising a driving portion that drives the first and second laser light sources such that light emissions by the laser light sources are pulsed in an alternating manner.

7. The scanning type image display apparatus according to Claim 6, wherein the driving portion drives the first and second laser light sources so that the light emissions by the first and second laser light sources occur mutually different periods.

8. The scanning type image display apparatus according to any one of Claims 5 to 7,
wherein on at least one of the incidence surfaces of the polarization beam splitter on which the light beams from the first and second laser light sources are incident, a light beam having a specific polarization direction is reflected, and
wherein the at least one surface is inclined with respect to an optical axis of the light beam.

9. The scanning type image display apparatus according to Claim 8, further comprising a detecting portion for detecting a light intensity of the light beam reflected on the at least one surface.

# FIG.1

EP 2 000 845 A1

# FIG.2

101

101j

103

104

1041

1042

Y

X

Z

# FIG.3

# FIG.4

# FIG.5

# FIG.6

# FIG.7

# FIG.8

**European Patent Office**

**EUROPEAN SEARCH REPORT**

Application Number

EP 08 25 1957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 05 060989 A (KOMATSU MFG CO LTD) 12 March 1993 (1993-03-12) * pages 3,9; figures 1-3 * ----- | 1,5 | INV. G02B26/08 G02B26/10 H04N5/74 |
| X | JP 53 009548 A (FUJI XEROX CO LTD) 28 January 1978 (1978-01-28) * figures 3-7 * ----- | 1,5 | |
| A | JP 2007 047355 A (SEIKO EPSON CORP) 22 February 2007 (2007-02-22) * figures 2-5 * ----- | 1-9 | |
| A | EP 0 523 636 A (CANON KK [JP]) 20 January 1993 (1993-01-20) * the whole document * ----- | 1-9 | |
| | | | TECHNICAL FIELDS SEARCHED (IPC) |
| | | | G02B H04N |

The present search report has been drawn up for all claims

| Place of search | Date of completion of the search | Examiner |
|---|---|---|
| Munich | 12 August 2008 | Daffner, Michael |

EPO FORM 1503 03.82 (P04C01)

**ANNEX TO THE EUROPEAN SEARCH REPORT
ON EUROPEAN PATENT APPLICATION NO.**

EP 08 25 1957

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2008

| Patent document cited in search report | | Publication date | Patent family member(s) | | Publication date |
|---|---|---|---|---|---|
| JP 5060989 | A | 12-03-1993 | NONE | | |
| JP 53009548 | A | 28-01-1978 | NONE | | |
| JP 2007047355 | A | 22-02-2007 | NONE | | |
| EP 0523636 | A | 20-01-1993 | DE | 69222898 D1 | 04-12-1997 |
| | | | DE | 69222898 T2 | 12-03-1998 |
| | | | ES | 2108065 T3 | 16-12-1997 |
| | | | JP | 3093337 B2 | 03-10-2000 |
| | | | JP | 5019191 A | 29-01-1993 |

For more details about this annex : see Official Journal of the European Patent Office, No. 12/82

**EP 2 000 845 A1**

**REFERENCES CITED IN THE DESCRIPTION**

**Patent documents cited in the description**

• JP 5060989 A